# EUROPÄISCHE PATENTSCHRIFT

(11) **EP 1 224 434 B1**
(45) Veröffentlichungstag und Bekanntmachung des Hinweises auf die Patenterteilung: **14.07.2004**
(21) Anmeldenummer: 00975825.1
(22) Anmeldetag: 09.10.2000
(51) Int. Cl.: G01B 11/30

(54) **INTERFEROMETRISCHE MESSVORRICHTUNG ZUR FORMVERMESSUNG**
INTERFEROMETRIC MEASURING DEVICE FOR FORM MEASUREMENT
DISPOSITIF DE MESURE INTERFEROMETRIQUE POUR MESURER DES FORMES

(30) Priorität: 09.10.1999 DE 19948813; 26.09.2000 DE 10047495
(43) Veröffentlichungstag der Anmeldung: 24.07.2002
(73) Patentinhaber: ROBERT BOSCH GMBH, 70442 Stuttgart (DE)
(72) Erfinder: LINDNER, Michael, 71397 Leutenbach (DE); DRABAREK, Pawel, 75233 Tiefenbronn (DE)
(86) Internationale Anmeldenummer: PCT/DE2000/003547
(87) Internationale Veröffentlichungsnummer: WO 2001/027558

(56) Entgegenhaltungen:
- WO-A-92/19930
- DE-A- 4 108 944
- DE-A- 19 625 830
- DE-A- 19 721 842
- US-A- 3 849 003
- US-A- 5 155 363
- US-A- 5 493 398
- US-A- 5 933 237
- PATENT ABSTRACTS OF JAPAN vol. 015, no. 327 (P-1240), 20. August 1991 (1991-08-20) & JP 03 120436 A (ASAHI OPTICAL CO LTD), 22. Mai 1991 (1991-05-22)

## Beschreibung

### Stand der Technik

Die Erfindung bezieht sich auf eine interferometrische Messvorrichtung zur Formvermessung insbesondere rauher Oberflächen eines Messobjekts mit einer eine kurzkohärente Strahlung abgebenden Strahlungserzeugungseinheit, einem Strahlteiler zum Bilden eines ersten und eines zweiten Teilstrahls, von denen der erste über einen Objektlichtweg zu dem Messobjekt und der zweite über einen Referenzlichtweg zu einer reflektierenden Referenzebene gerichtet ist, mit einem Überlagerungselement, an dem die von dem Messobjekt und der Referenzebene kommende Strahlung zur Überlagerung gebracht werden, und einem Bildwandler, der die überlagerte Strahlung aufnimmt und entsprechende Signale einer Einrichtung zur Auswertung zuführt, wobei zur Messung die optische Weglänge des Objektlichtweges relativ zur optischen Weglänge des Referenzlichtweges geändert wird.

Eine derartige interferometrische Messvorrichtung ist in der DE 197 21 842 C2 angegeben. Bei dieser bekannten Messvorrichtung gibt eine Strahlungserzeugungseinheit, beispielsweise eine Leuchtdiode oder Superlumineszenzdiode, eine kurzkohärente Strahlung ab, die über einen Strahlteiler in einen ersten, über einen Objektlichtweg geführten Teilstrahl und einen zweiten, über einen Referenzlichtweg geführten Teilstrahl aufgeteilt wird. Der Referenzlichtweg wird mittels zweier Deflektorelemente und eines dahinter angeordneten, feststehenden Beugungsgitters durch Ansteuern der Deflektorelemente periodisch geändert, um die Objektoberfläche in Tiefenrichtung abzutasten. Wenn der Objektlichtweg und der Referenzlichtweg übereinstimmen, ergibt sich ein Maximum des Interferenzkontrasts, der mittels einer der Photodetektoreinrichtung nachgeschalteten Auswerteeinrichtung erkannt wird.

Eine vom Messprinzip (Weisslichtinterferometrie oder Kurzkohärenzinterferometrie) her entsprechende interferometrische Messvorrichtung ist auch in der DE 41 08 944 A1 angegeben. Hierbei wird zur Änderung des Lichtwegs in dem Referenzstrahlengang jedoch ein bewegter Spiegel verwendet. Bei diesem Verfahren wird die Oberfläche des Objektes auf die Fotodetektoreinrichtung mittels eines optischen Systems abgebildet, wobei es jedoch schwierig ist, in Hohlräumen Messungen vorzunehmen.

Zu weiteren derartigen interferometrischen Messvorrichtungen bzw. interferometrischen Messverfahren auf der Basis der Weißlichtinterferometrie wird auf P. de Groot, L. Deck, "Surface profiling by analysis of white-light interferograms in the spatial frequency domain" J. Mod. Opt., Vol. 42, No. 2, 389-401, 1995 und T. Maack, G. Notni, W. Schreiber, W.-D. Prenzel, "Endoskopisches 3-D-Formmesssystem", in Jahrbuch für Optik und Feinmechanik, Ed. W.-D. Prenzel, Verlag Schiele und Schoen, Berlin, 231-240, 1998 verwiesen.

Bei den genannten interferometrischen Messvorrichtungen bzw. Messverfahren besteht eine Schwierigkeit darin, Messungen in tiefen Hohlräumen bzw. engen Kanälen vorzunehmen. Ein Vorschlag für eine Messvorrichtung, in der mittels Weißlichtinterferometrie auch in Hohlräumen Messungen vorgenommen werden können, ist in der DE 197 21 843 C1 gezeigt. Hierbei ist vorgeschlagen, einen ersten Teilstrahl weiter in einen Referenz-Teilstrahl und mindestens einen Mess-Teilstrahl zu trennen, wobei ein weiterer Strahlteiler und der Referenzspiegel in einer gemeinsamen Messsonde angeordnet sind. Eine derartige Messsonde kann zwar in Hohlräume eingeführt werden, jedoch kann mit dieser Vorrichtung pro Messung im Wesentlichen nur eine kleine, punktartige Stelle der Oberfläche abgetastet werden. Um mehr Stellen der Oberfläche in Tiefenrichtung zu vermessen, ist eine Relativbewegung zwischen Messobjekt und Messsonde erforderlich, wobei aber eine exakte laterale Zuordnung aufwendig und schwierig ist.

Der Erfindung liegt die Aufgabe zugrunde, eine interferometrische Messvorrichtung der eingangs erwähnten Art bereitzustellen, mit der insbesondere in tiefen Hohlräumen vereinfachte Messungen mit hoher Genauigkeit ermöglicht werden.

Diese Aufgabe wird mit den Merkmalen des Anspruches 1 gelöst. Hiernach ist vorgesehen, dass in dem Objektlichtweg eine optische Sonde mit einer optischen Anordnung zum Erzeugen mindestens einer optischen Zwischenabbildung vorgesehen ist.

Durch die Zwischenabbildungen mittels der optischen Anordnung wird es, ähnlich einem Endoskop oder Boreskop möglich, die betrachtete Oberfläche außer mit hoher longitudinaler Auflösung auch mit einer hohen lateralen Auflösung über eine Strecke abzubilden, die groß ist gegenüber dem Durchmesser der abbildenden Optik. Die optische Sonde kann beispielsweise in Bohrungen von Ventilsitzen oder in Gefäße von Organismen für medizinische Messzwecke eingeführt werden. Im Gegensatz zu einem herkömmlichen Endoskop wird nun quantitative Tiefeninformation gewonnen. Eine vorteilhafte Ausführung besteht dabei darin, dass die mindestens eine Zwischenabbildung im Objektlichtweg erzeugt wird. Dabei wird dieselbe optische Anordnung zum Beleuchten der Messstelle auf dem Messobjekt und zum Übertragen der von dem Messobjekt kommenden Strahlung zu der Photodetektoreinrichtung genutzt, wenn vorgesehen ist, dass durch die optische Sonde sowohl die zu dem Messobjekt hinführende als auch die von ihm zurückkommende Strahlung verlaufen.

Die optische Abbildung auf die Photodetektoreinrichtung kann dadurch verbessert werden, dass in dem Referenzlichtweg zum Kompensieren eines in der optischen Sonde vorhandenen Glasanteils hinsichtlich der Elemente für die Zwischenabbildung(en) eine gleiche weitere optische Sonde oder zumindest eine Glasanordnung vorgesehen ist.

Ein für die Handhabung günstiger Aufbau besteht darin, dass der optische Gangunterschied zwischen dem ersten und zweiten Arm größer ist als die Kohärenzlänge der Strahlung, dass die von dem ersten Spiegel und dem reflektierenden Element kommende Strahlung mittels eines weiteren Strahlteils durch eine gemeinsame optische Sonde geleitet sind (common path), dass in der optischen Sonde ein Referenzspiegel in einer solchen Entfernung von dem Messobjekt angeordnet ist, dass der Gangunterschied zwischen dem ersten Spiegel und dem reflektierenden Element aufgehoben ist, und dass ein Teil der auf den Referenzspiegel auffallenden Strahlung zu der Photodetektoreinrichtung reflektiert und ein Teil zu dem Messobjekt durchgelassen und von dort zu der Photodetektoreinrichtung reflektiert wird. Ein weiterer Vorteil besteht bei diesem Aufbau darin, dass Objekt- und Referenzwelle nahezu die identische Optik durchlaufen, wodurch sich Aberrationen weitgehend kompensieren. Außerdem ist diese Anordnung robust gegen mechanische Erschütterungen. Zwei Ausführungsmöglichkeiten bestehen dabei darin, dass der Referenzspiegel auf einer Planplatte oder einem Prisma vorgesehen ist.

Die Handhabung kann dabei weiterhin dadurch erleichtert werden, dass zwischen dem Strahlteiler und dem weiteren Strahlteiler eine Faseroptik angeordnet ist.

Auch bei diesem Aufbau ist eine Trennung im Wesentlichen in einen Sondenteil und einen Teil mit Modulationsanordnung verwirklicht, wobei die Handhabung ebenfalls begünstigt wird.

Die Erfindung wird nachfolgend anhand von Ausführungsbeispielen unter Bezugnahme auf die Zeichnungen näher erläutert. Es zeigen:
- Fig. 1: ein erstes Ausführungsbeispiel einer interferometrischen Messvorrichtung mit einer optischen Sonde in einem Messlichtweg,
- Fig. 2: ein zweites Ausführungsbeispiel, bei dem sowohl im Messlichtweg als auch im Referenzlichtweg eine optische Sonde vorgesehen sind,
- Fig. 3: einen Aufbau der interferometrischen Messvorrichtung mit einem gemeinsamen Referenz- und Messlichtweg,
- Fig. 4: ein weiteres Ausführungsbeispiel, bei dem gegenüber dem Aufbau nach Fig. 3 zwischen einem ersten und einem weiteren Strahlteiler eine Faseroptik vorgesehen ist und
- Fig. 5: ein weiteres Aufbaubeispiel der interferometrischen Messvorrichtung.

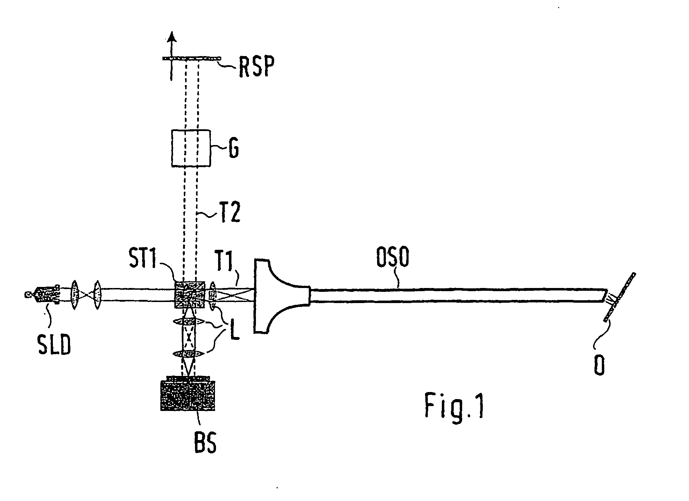

Fig. 1 zeigt eine interferometrische Messvorrichtung mit einer eine kurzkohärente Strahlung abgebenden Strahlungserzeugungseinheit SLD, wie z.B. einer Leuchtdiode oder Superlumineszenzdiode, deren Strahlung mittels eines Strahlteilers ST1 in einen ersten Teilstrahl T1 eines Messlichtwegs und einen zweiten Teilstrahl T2 eines Referenzlichtwegs aufgeteilt wird. Der Aufbau entspricht einem Michelson-Interferometer. In dem Referenzlichtweg wird der zweite Teilstrahl von einer Referenzebene in Form eines Referenzspiegels RSP reflektiert, wobei der Referenzlichtweg beispielsweise durch Bewegen des Referenzspiegels RSP oder mittels akkustooptischer Deflektoren, wie in der eingangs erwähnten DE 197 21 842 C2 beschrieben, periodisch geändert wird. Wird die Änderung des Lichtwegs mit zwei akusto-optischen Deflektoren vorgenommen, so erübrigt sich ein mechanisch bewegtes reflektierendes Element, sondern stattdessen kann ein feststehendes Element, insbesondere ein Gitter, verwendet werden. Mittels eines Glasblocks G kann bei Bedarf die Dispersion einer in dem Objektlichtweg angeordneten optischen Sonde OSO korrigiert werden.

In dem Objektlichtweg wird die Strahlung in die optische Sonde OSO eingekoppelt, so dass die Strahlung eine zu vermessende Oberfläche eines Messobjekts O beleuchtet. Die Objektoberfläche wird durch die optische Sonde OSO über eine oder mehrere Zwischenabbildungen auf eine Photodetektoreinrichtung in Form eines Bildwandlers bzw. Bildsensors BS, beispielsweise eine CCD-Kamera abgebildet. Das Bild des Messobjekts 0 auf dem Bildsensor BS wird mit der Referenzwelle des zweiten Teilstrahls überlagert. Im Bild des Messobjekts O tritt hoher Interferenzkontrast dann auf, wenn ein Gangunterschied in dem Referenzlichtweg und dem Messlichtweg kleiner als die Kohärenzlänge ist. Das Messprinzip beruht dabei auf Weißlichtinterferometrie (Kurzkohärenzinterferometrie), wie sie in den eingangs erwähnten Druckschriften näher beschrieben ist. Die Länge des Referenzlichtwegs wird über den gesamten Messbereich zum Abtasten in Tiefenrichtung der zu vermessenden Oberfläche variiert, wobei für jeden Messpunkt die Länge des Referenzlichtwegs detektiert wird, bei welchem der höchste Interferenzkontrast auftritt. Durch die Zwischenabbildungen wird es ermöglicht, die Oberfläche des Messobjekts mit einer hohen lateralen Auflösung über eine Strecke abzubilden, die groß ist gegenüber dem Durchmesser der abbildenden Optik. Die optische Sonde OSO ähnelt einem Endoskop bzw. Boreskop, wobei jedoch die Beleuchtung und die Rückführung der von der Messoberfläche kommende Strahlung über dieselbe optische Anordnung über zumindest eine Zwischenabbildung erfolgen. In Fig. 1 sind als weitere Abbildungselemente schematisch einige Linsen L dargestellt. Die eigentlichen Zwischenabbildungen werden in der optischen Sonde OSO erzeugt.

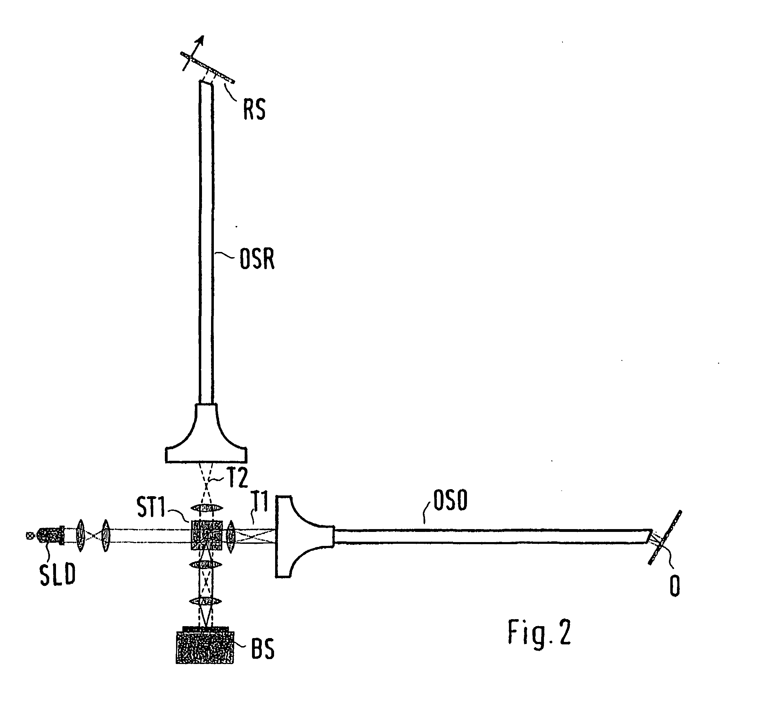

Für Anwendungen, in welchen eine genaue Kompensation des Einflusses der abbildenden Linsen der optischen Sonde OSO notwendig ist, wird auch in dem Referenzlichtweg bzw. Referenzarm zwischen dem Strahlteiler ST1 und dem Referenzspiegel RSP die gleiche optische Sonde OSR integriert, wie in dem Objektlichtweg zwischen dem Strahlteiler ST1 und dem Messobjekt O, wie in Fig. 2 dargestellt.

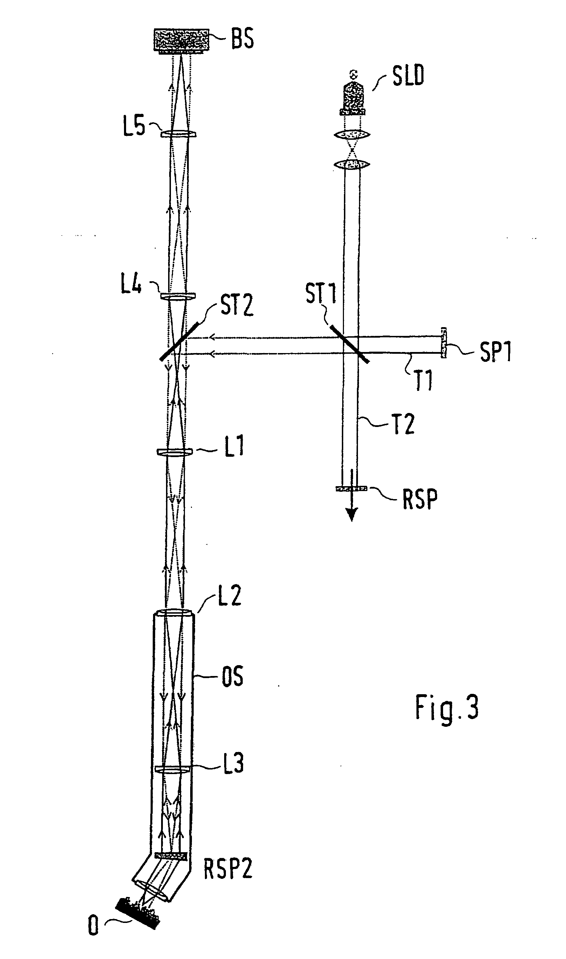

In einem abgewandelten Aufbau gemäß Fig. 3 lässt sich die interferometrische Messvorrichtung auch als Anordnung mit einem gemeinsamen Referenz- und Messarm (Common Path-Anordnung) verwirklichen. Die interferometrische Messvorrichtung wird wieder mit einer kurzkohärenten (breitbandigen) Strahlungserzeugungseinheit beleuchtet. Der Strahlteiler ST1 teilt das Licht in zwei Armen in den ersten Teilstrahl T1 und den zweiten Teilstrahl T2, wobei der erste Teilstrahl T1 auf einen ersten, feststehenden Spiegel SP1 und der zweite Teilstrahl T2 auf das reflektierende Element RSP in Form des Referenzspiegels fällt.

Der optische Gangunterschied zwischen den so gebildeten Armen ist größer als die Kohärenzlänge der von der Strahlungserzeugungseinheit SLD erzeugten Strahlung. Von den beiden Spiegeln SP1 und RSP aus wird die reflektierte Strahlung über den Strahlteiler ST1 und einen weiteren Strahlteiler ST2 in die optische Sonde OS eingespeist. Die Besonderheit dieses Aufbaus ist, dass sich ein Referenzspiegel RSP2 in der optischen Sonde OS selbst befindet.

Ein Teil der Strahlung wird an diesem Referenzspiegel RSP2 reflektiert, während der andere Teil der Strahlung die zu vermessende Oberfläche beleuchtet. Der Referenzspiegel RSP2 kann auf einer Planplatte aufgebracht sein oder auf einem Prisma. Durch die Verwendung eines Prismas kann die Wellenfront der die Objektoberfläche beleuchtenden Strahlung, d.h. der Objektwelle an die Geometrie (z.B. Neigung) der zu vermessenden Oberfläche angepasst werden. Das Messobjekt O wird mittels der optischen Sonde OS wiederum über eine oder mehrere Zwischenabbildungen auf den Bildsensor BS abgebildet und mit der Referenzwelle überlagert. Zur Gewinnung der Höheninformation wird das reflektierende Element RSP über den Messbereich verfahren oder die Änderung des Lichtwegs wie vorstehend beschrieben vorgenommen. In dem Bild des Messobjekts O tritt hoher Interferenzkontrast dann auf, wenn der Gangunterschied zwischen dem feststehenden Spiegel SP1 und dem reflektierenden Element RSP bzw. der Lichtwege der beiden Arme genau dem optischen Gangunterschied zwischen dem Referenzspiegel RSP2 und dem Messobjekt O ist. Zur Gewinnung des Höhenprofils werden bekannte Verfahren zur Detektion des höchsten Interferenzkontrastes in jedem Bildpunkt (Pixel) verwendet. Dieser Aufbau hat den Vorteil, dass Objekt- und Referenzwelle nahezu die identische Optik durchlaufen, wodurch sich Aberrationen weitgehend kompensieren. Außerdem ist diese Anordnung robuster gegen mechanische Erschütterungen.

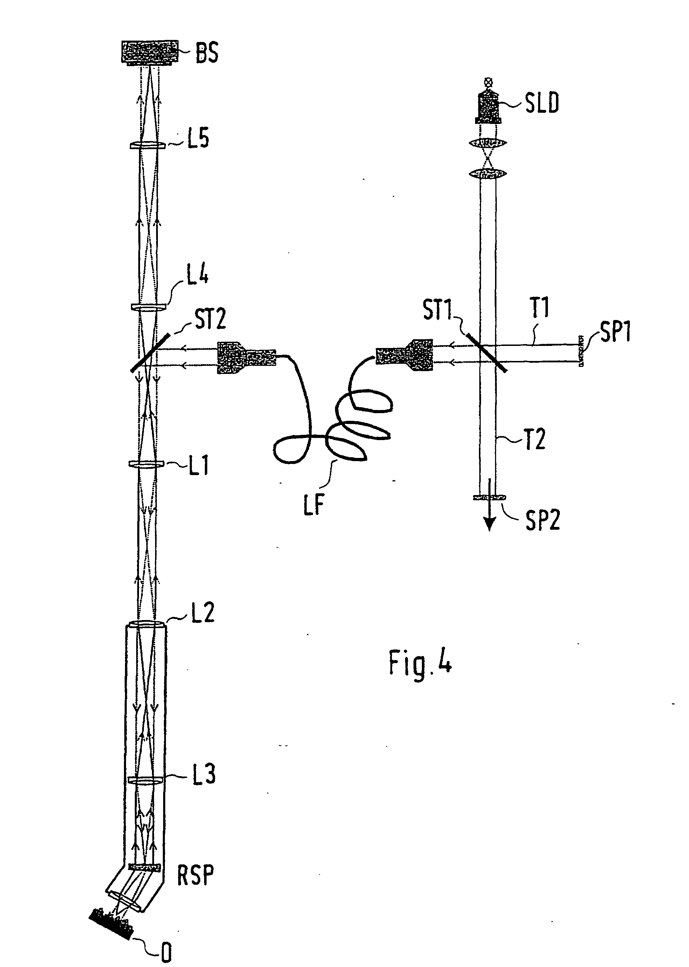

Für eine noch einfachere Handhabung der Messvorrichtung kann die Strahlung des Strahlteilers ST1 auch mittels einer Faseroptik LF zu dem weiteren Strahlteiler ST1 übertragen werden, wie in Fig. 4 dargestellt.

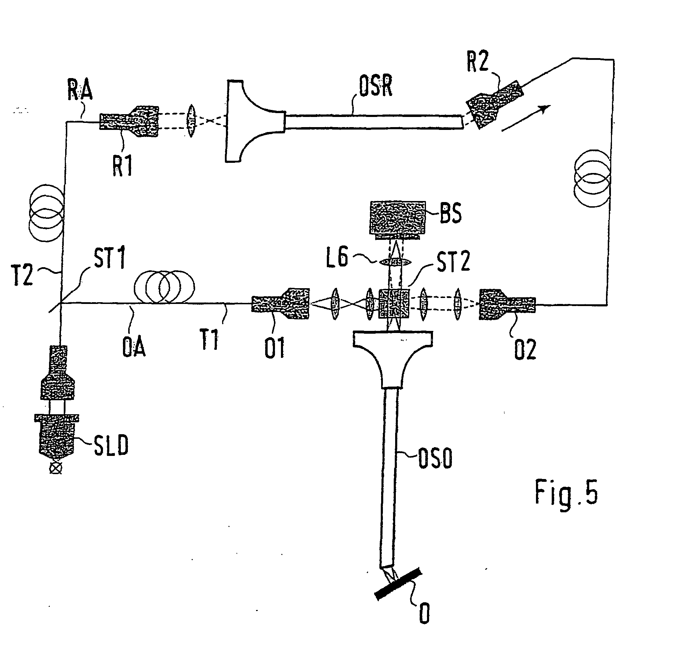

Ein weiterer alternativer Aufbau ist in Fig. 5 dargestellt. Alternativ zu dem Aufbau mit dem gemeinsamen Referenz- und Messlichtweg gemäß den Fig. 3 und 4 ist eine kombinierte Mach-Zehnder-Michelson-Anordnung vorgesehen. Wieder wird eine breitbandige Strahlungserzeugungseinheit SLD verwendet, deren Strahlung in eine Faseroptik eingekoppelt wird. Der erste Strahlteiler ST1 teilt die Strahlung in einen Objektarm OA und Referenzarm RA auf. In dem Objektarm OA wird der erste Teilstrahl T1 aus der entsprechenden Lichtleitfaser ausgekoppelt und über den weiteren Strahlteiler ST2 in die optische Sonde OSO eingekoppelt, so dass die zu vermessende Oberfläche des Messobjekts O beleuchtet wird. Die Objektoberfläche wird durch die optische Sonde OSO über eine oder mehrere Zwischenabbildungen auf dem Bildsensor BS abgebildet. In dem Referenzarm RA wird das Licht aus der entsprechenden Lichtleitfaser ausgekoppelt, durchläuft dann, wenn nötig, die gleiche optische Sonde OSR wie sie in dem Objektarm OA eingesetzt ist und wird an einem zweiten Faserkoppler R2 wieder in eine dort angeordnete Lichtleitfaser eingekoppelt. Über die Lichtleitfaser gelangt die Referenzwelle bis zu dem weiteren Strahlteiler ST2. Dort wird sie ausgekoppelt und über den weiteren Strahlteiler ST2 auf dem Bildsensor BS mit der Objektwelle überlagert. In beiden Armen müssen die optischen Wege in der Luft, den optischen Sonden OSO bzw. OSR sowie in den Lichtleitfasern abgeglichen sein. Die Durchstimmung der Weglänge im Referenzarm RA erfolgt hier z.B. durch Verschiebung des zweiten Faserkopplers R2, so dass sich der optische Luftweg im Referenzarm ändert.

## Patentansprüche

1. Interferometrische Messvorrichtung zur Formvermessung insbesondere rauher Oberflächen eines Messobjekts (O) mit einer eine kurzkohärente Strahlung abgebenden Strahlungserzeugungseinheit (SLD), einem Strahlteiler (ST1) zum Bilden eines ersten und eines zweiten Teilstrahls (T1, T2), von denen der erste über einen Objektlichtweg zu dem Messobjekt (O) und der zweite über einen Referenzlichtweg zu einer reflektierenden Referenzebene (RSP) gerichtet ist, mit einem Überlagerungselement, an dem die von dem Messobjekt (O) und der Referenzebene (RSP) kommende Strahlung zur Überlagerung gebracht werden, und einem Bildwandler (BS), der die überlagerte Strahlung aufnimmt und entsprechende Signale einer Einrichtung zur Auswertung zuführt, wobei zur Messung die optische Weglänge des Objektlichtweges relativ zur optischen Weglänge des Referenzlichtweges geändert wird,
**dadurch gekennzeichnet,**
**dass** in dem Objektlichtweg eine optische Sonde (OS, OSO) mit einer optischen Anordnung zum Erzeugen mindestens einer optischen Zwischenabbildung vorgesehen ist.

2. Messvorrichtung nach Anspruch 1,
**dadurch gekennzeichnet,**
**dass** die mindestens eine Zwischenabbildung im Objektlichtweg erzeugt wird.

3. Messvorrichtung nach Anspruch 1 oder 2,
**dadurch gekennzeichnet,**
**dass** durch die optische Sonde (OS, OSO) sowohl die zu dem Messobjekt (O) hinführende als auch die von ihm zurückkommende Strahlung verlaufen.

4. Messvorrichtung nach einem der vorhergehenden Ansprüche,
**dadurch gekennzeichnet,**
**dass** in dem Referenzlichtweg zum Kompensieren eines in der optischen Sonde (OSO) vorhandenen Glasanteils hinsichtlich der Elemente für die Zwischenabbildung(en) eine gleiche weitere optische Sonde (OSR) oder zumindest eine Glasanordnung vorgesehen ist.

5. Messvorrichtung nach einem der vorhergehenden Ansprüche,
**dadurch gekennzeichnet,**
**dass** der von dem Strahlteiler (ST1) gebildete erste Teilstrahl (T1) zunächst über einen ersten Arm auf einen feststehenden ersten Spiegel (SP1) gerichtet ist, während der zweite Teilstrahl (T2) über einen zweiten Arm auf das reflektierende Element (RSP) gerichtet ist,
**dass** der optische Gangunterschied zwischen dem ersten und zweiten Arm größer ist als die Kohärenzlänge der Strahlung,
**dass** die von dem ersten Spiegel (SP1) und dem reflektierenden Element (RSP) kommende Strahlung mittels eines weiteren Strahlteilers (ST2) durch eine gemeinsame optische Sonde (OSO) geleitet sind,
**dass** in der optischen Sonde (OSO) ein Referenzspiegel (RSP2) in einer solchen Entfernung von dem Messobjekt (O) angeordnet ist,
**dass** der Gangunterschied zwischen dem ersten Spiegel (SP1) und dem reflektierenden Element (RSP) aufgehoben ist, und
**dass** ein Teil der auf den Referenzspiegel (RSP2) auffallenden Strahlung zu der Photodetektoreinrichtung (BS) reflektiert und ein Teil zu dem Messobjekt (O) durchgelassen und von dort zu der Photodetektoreinrichtung (BS) reflektiert wird.

6. Messvorrichtung nach Anspruch 5,
**dadurch gekennzeichnet,**
**dass** der Referenzspiegel (RSP2) auf einer Planplatte oder einem Prisma vorgesehen ist.

7. Messvorrichtung nach Anspruch 5 oder 6,
**dadurch gekennzeichnet,**
**dass** zwischen dem Strahlteiler (ST1) und dem weiteren Strahlteiler (ST2) eine Faseroptik (LF) angeordnet ist.

8. Messvorrichtung nach einem der Ansprüche 1 bis 4,
**dadurch gekennzeichnet,**
**dass** die von der Strahlungserzeugungseinheit (SLD) abgegebene Strahlung in eine Faseroptik eingekoppelt und anschließend von dem Strahlteiler (ST1) in den ersten und zweiten Teilstrahl (T1, T2) aufgeteilt wird,
**dass** der erste Teilstrahl (T1) in einem Objektarm (OA) aus der Faseroptik ausgekoppelt und über einen weiteren Strahlteiler (ST2) in die optische Sonde (OSO) eingekoppelt und zu dem Messobjekt (O) geführt wird, von der die Strahlung über die optische Anordnung (L; L1 - L5; L6) auf die Photodetektoreinrichtung (BS) geführt wird,
**dass** der zweite Teilstrahl (T2) in einem Referenzarm (RA) aus der Faseroptik des Referenzarms (RA) ausgekoppelt wird, die weitere optische Sonde (OSR) durchläuft, über eine weitere Faseroptik zu dem weiteren Strahlteiler (ST2) und von dort auf den Bildwandler (BS) geführt wird zur Überlagerung mit der von dem Messobjekt (O) kommenden Strahlung.

## Claims

1. Interferometric measuring device for shape measurement of, in particular, rough surfaces of a measurement object (O) with the aid of a radiation producing unit (SLD) outputting a short-coherence radiation, a beam splitter (ST1) for forming a first and a second partial beam (T1, T2) of which the first is directed to the measurement object (O) via an object light path and the second is directed to a reflecting reference plane (RSP) via a reference light path, having a superimposition element at which the radiation coming from the measurement object (O) and the reference plane (RSP) are brought into superimposition, and an image converter (BS) which picks up the superimposed radiation and feeds corresponding signals to a device for evaluation, the optical path length of the object light path being changed in relation to the optical path length of the reference light path for measurement purposes, **characterized in that** an optical probe (OS, OSO) with an optical arrangement for producing at least one optical intermediate image is provided in the object light path.

2. Measuring device according to Claim 1, **characterized in that** the at least one intermediate image is produced in the object light path.

3. Measuring device according to Claim 1 or 2, **characterized in that** both the radiation leading to the measurement object (O) and the radiation returning from it run through the optical probe (OS, OSO).

4. Measuring device according to one of the preceding claims, **characterized in that** provided in the reference light path for the purpose of compensating a glass content present in the optical probe (OSO) with regard to the elements for the intermediate image(s) is an identical further optical probe (OSR) or at least one glass arrangement.

5. Measuring device according to one of the preceding claims, **characterized in that** the first partial beam (T1), formed by the beam splitter (ST1) is firstly directed via a first arm onto a fixed first mirror (SP1), while the second partial beam (T2) is directed via a second arm onto the reflecting element (RSP), **in that** the optical path difference between the first and the second arms is greater than the coherence length of the radiation, **in that** the radiation coming from the first mirror (SP1) and the reflecting element (RSP) is led by means of a further beam splitter (ST2) through a common optical probe (OSO), **in that** a reference mirror (RSP2) is arranged in the optical probe (OSO) at a distance from the measurement object (O) such that the path difference between the first mirror (SP1) and the reflecting element (RSP) is cancelled, and **in that** a portion of the radiation impinging on the reference mirror (RSP2) is reflected to the photodetector device (BS), and a portion is passed to the measurement object (O) and reflected from there to the photodetector device (BS).

6. Measuring device according to Claim 5, **characterized in that** the reference mirror (RSP2) is provided on a plane plate or a prism.

7. Measuring device according to Claim 5 or 6, **characterized in that** a fibre-optic system (LF) is arranged between the beam splitter (ST1) and the further beam splitter (ST2).

8. Measuring device according to one of Claims 1 to 4, **characterized in that** the radiation output by the radiation producing unit (SLD) is coupled into a fibre-optic system and subsequently split by the beam splitter (ST1) into a first and second partial beam (T1, T2), **in that** the first partial beam (T1) is coupled out of the fibre-optic system in an object arm (OA) and coupled into the optical probe (OSO) via a further beam splitter (ST2) and fed to the measurement object (O), from where the radiation is guided onto the photodetector device (BS) via the optical arrangement (L; L1-L5; L6), and **in that** the second partial beam (T2) is coupled out in a reference arm (RA) from the fibre-optic device of the reference arm (RA), traverses the further optical probe (OSR), via a further fibre-optic system, to the further beam splitter (ST2) and is guided from there onto the image converter (BS) for superimposition with the radiation coming from the measurement object (O).

## Revendications

1. °) Dispositif de mesure interférométrique pour la mesure de formes, en particulier des surfaces rugueuses d'un objet à mesurer (O), comprenant une unité de production de rayonnement (SLD) qui émet un rayonnement à cohérence courte, un diviseur de faisceau (ST1) destiné à former un premier et un deuxième faisceaux partiels (T1, T2) dont le premier est dirigé, par un chemin optique objet, vers l'objet à mesurer (O) et le deuxième, par un chemin optique de référence, vers un plan de référence réfléchissant (RSP), un élément de superposition sur lequel les rayonnements provenant de l'objet à mesurer (O) et du plan de référence (RSP) sont mis en superposition, et un convertisseur d'image ( BS) qui reçoit le rayonnement superposé et envoie des signaux correspondants à un dispositif d'analyse, dispositif dans lequel, pour l'exécution de la mesure, on modifie la longueur optique du chemin optique objet relativement à la longueur optique du chemin optique de référence,
**caractérisé en ce que**
dans le chemin optique objet une sonde optique (OS, OSO) est munie d'un dispositif optique destiné à produire au moins une reproduction image intermédiaire optique.

2. Dispositif de mesure selon 1a revendication 1,
**caractérisé en ce que**
l'au moins une reproduction image intermédiaire est produite dans le chemin optique objet.

3. Dispositif de mesure selon la revendication 1 ou 2,
**caractérisé en ce que**
aussi bien le rayonnement allant vers l'objet à mesurer (O) que le rayonnement en revenant passent à travers la sonde optique (OS, OSO).

4. Dispositif de mesure selon une des revendications précédentes,
**caractérisé en ce qu'**
il est prévu dans le chemin optique de référence, pour la compensation d'une fraction vitreuse présente dans la sonde optique (OSO) vis-à-vis des éléments utilisés pour le ou les reproduction(s) image intermédiaires, une autre sonde optique identique (OSR) ou au moins un dispositif vitreux.

5. Dispositif de mesure selon une des revendications précédentes,
**caractérisé en ce que**
le premier faisceau partiel (T1) formé par le diviseur de faisceau (ST1) est tout d'abord dirigé sur un premier miroir fixe (SP1) , par l'intermédiaire d'un premier bras, tandis que le deuxième faisceau partiel (ST2) est dirigé sur l'élément réfléchissant (RSP), par l'intermédiaire d'un deuxième bras,
la différence de marche optique entre le premier bras et le deuxième bras est plus grande que la longueur de cohérence du rayonnement,
le rayonnement provenant du premier miroir (SP1) et celui provenant de l'élément réfléchissant (RSP) sont envoyés à travers une sonde optique commune (OSO) au moyen d'un autre diviseur de faisceau (ST2),
un miroir de référence (RSP2) est disposé dans la sonde optique (OSO), à une distance de l'objet à mesurer (O) telle que
la différence de marche entre le premier miroir (SP1) et le miroir réfléchissant (RSP) est supprimée et
une partie du rayonnement tombant sur le miroir de référence (RSP2) est réfléchie en direction du dispositif photo-détecteur (BS) et une partie est transmise vers l'objet à mesurer (O) et réfléchie de là vers le dispositif photo-détecteur (BS).

6. Dispositif de mesure selon la revendication 5,
**caractérisé en ce que**
le miroir de référence (RSP2) est prévu sur une plaque plane ou sur un prisme.

7. Dispositif de mesure selon la revendication 5 ou 6,
**caractérisé en ce que**
une fibre optique (LF) est disposée entre le diviseur de faisceau (ST1) et l'autre diviseur de faisceau (ST2).

8. Dispositif de mesure selon une des revendications 1 à 4,
**caractérisé en ce que**
le rayonnement émis par l'unité de production de rayonnement (LSD) est injecté dans une fibre optique et divisé ensuite par le diviseur de faisceau (ST1) en les premier et deuxième faisceaux partiels (T1, T2),
le premier faisceau partiel (T1) passant dans un bras objet (OA) est extrait de la fibre optique et injecté dans la sonde optique (OSO) par l'intermédiaire d'un autre diviseur de faisceau (ST2) et envoyé à l'objet à mesurer (O), d'où le rayonnement est envoyé sur le dispositif photo-détecteur (BS) par l'intermédiaire du dispositif optique (L ; L1- L5 ; L6),
le deuxième faisceau partiel (T2) passant dans un bras de référence (RA) est extrait de la fibre optique du bras de référence (RA), traverse l'autre sonde optique (OSR), et est envoyé à l'autre diviseur de faisceau (ST2) par l'intermédiaire d'une autre fibre optique, de là, envoyé sur le convertisseur d'image (BS) pour être superposé au rayonnement provenant de l'objet à mesurer (O).
